# FASCICULE DE BREVET EUROPEEN

(11) **EP 1 241 041 B1**
(45) Date de publication et mention de la délivrance du brevet: **20.10.2004**
(21) Numéro de dépôt: 02004995.3
(22) Date de dépôt: 06.03.2002
(51) Int. Cl.: B60K 41/00, B60K 6/04

(54) **Véhicule à super-condensateur de récupération d'énergie au freinage**
Fahrzeug mit Super-Kondensator zur Bremsenergie-Rückgewinnung
Vehicle with super-capacitor for regenerative braking

(30) Priorité: 14.03.2001 FR 0103493
(43) Date de publication de la demande: 18.09.2002
(73) Titulaire: Conception et Développement Michelin S.A., 1762 Givisiez (CH)
(72) Inventeur: Charaudeau, Jean-Jacques, 1741 Cottens (CH); Bourqui, Gérald, 1752 Villars-sur-Glane (CH); Varenne, Pierre, 1740 Neyruz (CH)
(74) Mandataire: Bauvir, Jacques

(56) Documents cités:
- DE-A- 4 430 670
- DE-A- 19 923 277
- US-A- 5 318 142

## Description

La présente invention concerne les véhicules automobiles routiers utilisant l'électricité pour leur propulsion. Par exemple, on connaît les véhicules hybrides séries et les véhicules hybrides parallèles. Dans les véhicules à chaîne de traction dite hybride série, un moteur thermique entraîne un alternateur qui transforme l'énergie mécanique disponible à l'arbre du moteur thermique en énergie électrique. Cette énergie électrique alimente un ou des moteurs électriques de traction reliés mécaniquement aux roues motrices du véhicule. Le moteur thermique n'est pas relié mécaniquement aux roues. Dans les véhicules à chaîne de traction dite hybride parallèle, un moteur thermique et un moteur électrique sont tous les deux reliés mécaniquement aux roues motrices ; les couples qu'ils délivrent peuvent s'additionner pour entraîner les roues motrices.

Une chaîne de traction électrique pour véhicule selon le préambule de la revendication 1 est connue de DE 199 23 277. Dans les deux cas, il est bien connu d'installer des accumulateurs électriques, notamment dans le cas où l'on souhaite pouvoir entraîner le véhicule en mode électrique pur, moteur thermique coupé. Il est aussi bien connu de récupérer au moins en partie l'énergie au freinage d'un véhicule, en faisant fonctionner le moteur électrique de traction en générateur, et ainsi transformer l'énergie cinétique en énergie électrique que l'on stocke, plutôt que de la dissiper en chaleur.

Mais l'utilisation d'accumulateurs électriques pose différents problèmes. Un tel dispositif a une masse élevée au regard de la quantité d'énergie électrique stockée. Par exemple, une batterie au plomb peut stocker environ 20 Wh/kg. Cela augmente considérablement la masse d'un véhicule. Cela est source de gaspillage d'énergie lors des accélérations, et même lors des freinages car le rendement des conversions d'énergie cinétique en énergie électrique et d'énergie électrique en énergie cinétique ne peut être de 100 %. Par ailleurs, les problèmes de comportement dynamique d'un véhicule sont d'autant plus cruciaux que le véhicule est lourd. En outre, les batteries connues n'acceptent pas des courants de recharge suffisamment intenses pour pouvoir récupérer rapidement beaucoup d'énergie de freinage. Et l'on constate que plus on souhaite récupérer de l'énergie au freinage, plus la masse de batteries embarquées sur le véhicule est importante, ce qui est en soi consommateur d'énergie lors des phases d'accélération. Bien entendu, plus les rendements dans les conversions d'énergie sont faibles, moins on récupère au freinage l'énergie qu'il a fallu dépenser pour accélérer ce surplus de masse dû aux batteries.

Le but de la présente invention est de concevoir une chaîne de traction ayant un dispositif dans lequel on puisse stocker de l'énergie électrique lors de freinages. Le problème qui se pose est donc de pouvoir récupérer et stocker suffisamment d'énergie pour améliorer notablement le rendement global, c'est à dire diminuer la consommation de carburant pour un service donné.

L'invention propose une chaîne de traction électrique pour véhicule, la chaîne de traction comportant :
- une commande CA d'accélération et décélération à disposition du conducteur du véhicule ;
- une unité de traitement de la commande permettant de repérer et d'évaluer le couple moteur souhaité et de repérer et d'évaluer le couple freineur souhaité ;
- au moins une machine électrique reliée à au moins une roue motrice, et couplée à une ligne électrique reliant la source d'énergie électrique et la machine électrique, ladite machine électrique étant capable de fonctionner en moteur en absorbant de l'énergie électrique disponible sur la ligne électrique et en transmettant à ladite roue motrice un couple moteur, ladite machine électrique étant capable de fonctionner en génératrice en transmettant à ladite roue motrice un couple freineur et en restituant de l'énergie électrique sur la ligne électrique ;
- un dispositif de stockage d'énergie électrique branché sur ladite ligne électrique, le dispositif de stockage d'énergie électrique consistant en un ou plusieurs super-condensateur ;
- une source d'énergie électrique, disponible pour la traction du véhicule, autre que le dispositif de stockage d'énergie électrique ;
- un dispositif de gestion du mode de fonctionnement sélectionnant un mode récupération ou un mode restitution d'énergie ;
- une unité de pilotage du couple appliqué à la roue du véhicule, permettant de :
   - en cas de demande de couple moteur, faire fonctionner la machine électrique en moteur en consommant l'énergie électrique stockée dans le dispositif de stockage d'énergie électrique tant que la charge du dispositif de stockage d'énergie électrique n'est pas minimale,
   - en cas de demande de couple freineur, faire fonctionner la machine électrique en générateur en utilisant l'énergie électrique produite pour recharger le dispositif de stockage d'énergie électrique tant que la charge du dispositif de stockage d'énergie électrique n'est pas maximale,
caractérisée en ce que l'unité de pilotage (21, 22) du couple appliqué à la roue du véhicule utilise le dispositif de stockage d'énergie électrique autre que la source d'énergie électrique en priorité par rapport à l'utilisation de l'autre source d'énergie électrique, pour fournir l'énergie nécessaire à la traction du véhicule en cas de demande de couple moteur, et l'unité de pilotage (21, 22) du couple appliqué à la roue du véhicule rechargera en priorité le dispositif de stockage de l'énergie électrique en priorité par rapport à l'utilisation de tout autre dispositif de freinage en cas de demande de freinage.

La présente invention propose une gestion d'énergie valable aussi bien dans le cas où la source d'énergie électrique est un moteur thermique, à essence ou diesel, entraînant un alternateur, comme dans un véhicule hybride, que dans le cas où la source d'énergie électrique est une pile à combustible ou une batterie électrochimique. Dans le cas des véhicules hybrides, la présente invention propose une gestion d'énergie valable aussi bien pour une architecture de véhicule hybride série ou parallèle. Dans la suite, on ne décrit que le cas des véhicules hybrides, étant signalé que le cas des véhicules à pile à combustible ou à batterie électrochimique se rapproche du cas du véhicule hybride série.

Il est fait un usage particulier d'un type particulier de composant capable d'accumuler de l'énergie électrique, à savoir les composants connus sous le nom de " super-condensateurs ", ou " ultra-condensateurs ", ou " double-layer capacitors ", proposés par exemple par la société Montena Components S.A., CH-1728 ROSSENS sous la marque Boostcap®. Ces composants présentent la caractéristique intéressante de pouvoir stocker des quantités d'énergie électrique bien plus importantes que les condensateurs classiques, les apparentant à des batteries électrochimiques, et de pouvoir admettre des courants de décharge et surtout de charge importants, contrairement aux batteries électrochimiques, les apparentant en cela aux condensateurs classiques. Si l'on situe les différents composants électriques cités ci-dessus sur un diagramme dont l'axe des abscisses donne la densité de puissance électrique absorbée (W/kg) et l'axe des ordonnées donne la densité d'énergie électrique stockée (Wh/kg), les super-condensateurs occupent une zone intermédiaire entre la zone occupée par les accumulateurs électrochimiques et les condensateurs conventionnels (diagramme de Ragone).

Remarquons au passage que la commande CA d'accélération et de décélération à la disposition du conducteur du véhicule peut prendre la forme de pédales séparées, une pédale d'accélérateur et une pédale de frein comme c'est l'usage sur les véhicules conventionnels, ou prendre la forme d'une commande unique.

L'invention part de l'observation des différents types de trajets qu'est susceptible de faire un véhicule.

En parcours montagneux, pendant les trajets en descente, le véhicule fonctionne souvent en phase de freinage. Mais, dans ce cas, les périodes pendant lesquelles le véhicule doit être retenu ou décéléré sont extrêmement longues et si l'on veut récupérer l'énergie pendant toutes ces phases, on est conduit à utiliser des capacités de stockage considérables. Le poids des systèmes de stockage embarqués par le véhicule pourrait devenir prohibitif, quelle que soit la technologie utilisée pour ces systèmes. Ce n'est donc pas ce type de trajet qui peut en soi justifier l'implantation de moyens pour stocker de l'énergie électrique récupérée lors de freinages.

Dans des trajets en plaine, il y a assez peu de phases de freinage du véhicule et donc l'énergie que l'on pourrait récupérer pendant le freinage est assez faible par rapport à l'énergie totale mise en jeu pour assurer le déplacement normal du véhicule.

En trajets urbains, il y a de nombreuses phases d'accélération assez courtes suivies de phases de décélération elles-mêmes assez courtes. Même pour une capacité de stockage d'énergie électrique modeste, on peut récupérer beaucoup d'énergie par rapport à la quantité d'énergie totale qu'il faut mobiliser pour assurer le déplacement d'un véhicule. On s'aperçoit que c'est surtout en trajets urbains qu'il est payant de récupérer de l'énergie au freinage du véhicule. C'est en effet dans ce type de trajets que la quantité d'énergie qu'il faut mobiliser pour assurer le freinage du véhicule représente une part significative par rapport à la quantité d'énergie qu'il faut mobiliser pour assurer l'accélération du véhicule. Et c'est surtout en trajets urbains que les phases d'accélération et de décélération se succèdent rapidement. On s'aperçoit qu'il n'est donc pas nécessaire d'avoir des accumulateurs de capacité de stockage importante pour pouvoir récupérer dans ce cas de figure une part significative d'énergie.

Les observations du déposant l'ont conduit à estimer que, pour un trajet urbain, l'énergie mobilisée par la décélération d'un véhicule représente de 30 % à 40 % de l'énergie mobilisée par l'accélération dudit véhicule. Donnons un exemple réaliste. Pour un véhicule de 1000 kg roulant à 50 km/h, l'énergie potentiellement récupérable lors d'un freinage vaut environ 85 kJoules. Si l'on souhaite immobiliser ce véhicule en 10 secondes, la puissance de freinage mise en jeu pendant 10 secondes vaut environ en moyenne 8,5 kW. Grâce à la technologie actuelle des super-condensateurs, on peut aisément adopter des composants tels que l'on dispose d'une puissance de crête valant au moins le double de la puissance de freinage moyenne évoquée ci-dessus, aussi bien en charge qu'en décharge. A titre indicatif, pour 85 kJoules, la masse du dispositif de stockage d'énergie à base de super-condensateurs est de l'ordre de 15 kg, et le volume de l'ordre de 20 litres. Indépendamment de la technologie utilisée pour le dispositif de stockage d'énergie électrique, on propose le dimensionnement suivant : il s'avère intéressant que, par tonne de véhicule, le dispositif de stockage puisse emmagasiner au moins 70 kJoules, et de préférence au plus 150 kJoules.

Le principe de gestion d'énergie décrit ici peut être appliqué aussi bien pour un véhicule hybride série que pour un véhicule hybride parallèle, ou toute autre forme de véhicule à traction électrique. Ce principe permet, en choisissant un dispositif de stockage d'énergie électrique d'assez faible capacité, de construire un véhicule qui reste malgré tout assez léger. Dans ses applications aux véhicules hybrides, l'invention ne cherche pas à construire un véhicule à émission zéro. Elle propose de construire un véhicule assez polyvalent, destiné à rouler aussi bien en campagne qu'en ville et, dans les trajets urbains, à utiliser au mieux l'énergie en fonction du service rendu par le véhicule.

C'est pourquoi l'on propose ce principe de gestion visant à toujours décharger prioritairement le dispositif de stockage accumulant de l'énergie électrique, afin de pouvoir être prêt à récupérer de l'énergie au freinage suivant. Grâce à ce principe de gestion, on peut récupérer une part d'énergie de freinage statistiquement importante avec une capacité du dispositif de stockage d'énergie électrique assez faible. L'objectif prioritaire de toujours chercher à décharger le dispositif de stockage d'énergie n'exclut pas que, si la demande d'accélération venant du pilote est trop importante, l'énergie utilisée pour l'accélération provienne aussi d'une autre source que le dispositif de stockage d'énergie électrique.

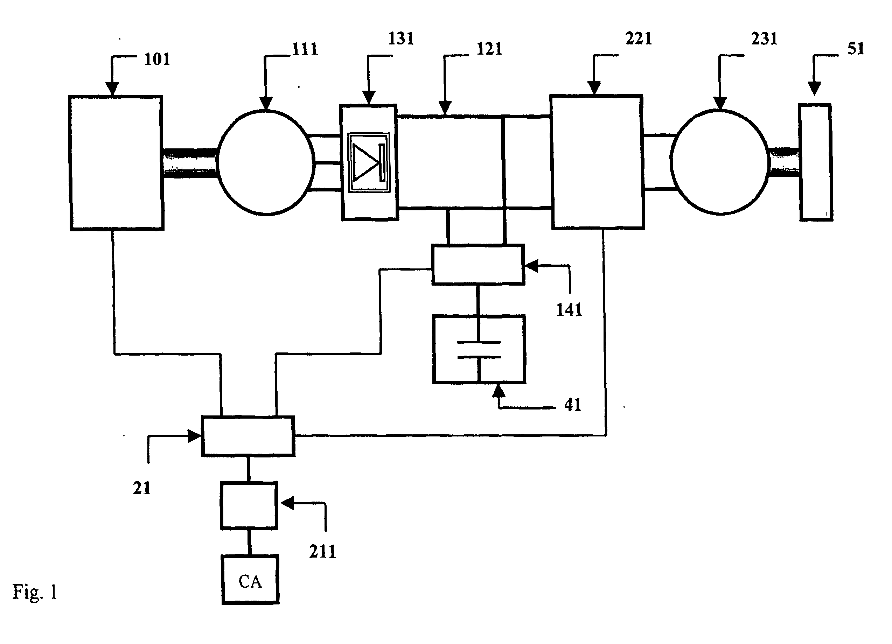

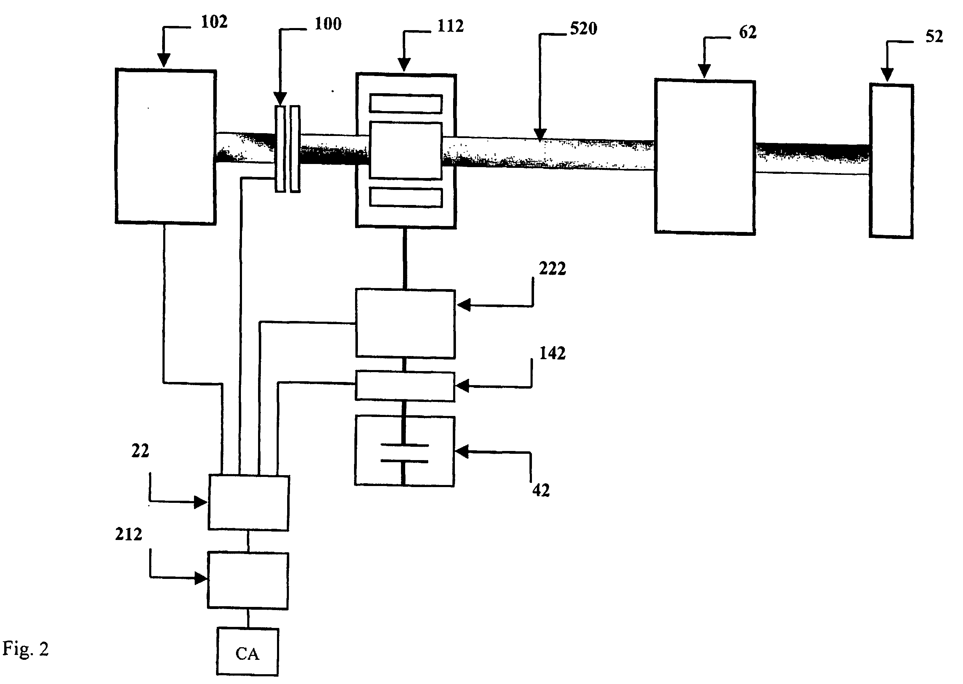

L'invention est illustrée au moyen des schémas annexés, sur lesquels :
■ la figure 1 est un schéma de principe d'une chaîne de traction pour véhicule hybride série, selon l'invention ;
■ la figure 2 est un schéma de principe d'une chaîne de traction pour véhicule hybride parallèle, selon l'invention.

A la figure 1, on voit un moteur thermique 101 entraînant un alternateur 111. L'énergie électrique fournie par ce dernier alimente un moteur électrique de traction 231, via un redresseur 131, une ligne électrique 121, et un onduleur 221. Au passage, signalons que dans le cas d'un véhicule à pile à combustible, le système de génération d'énergie électrique remplace les éléments 101, 111 et 131 de la figure 1.

Le moteur électrique de traction 231 est mécaniquement couplé à une roue 51. Un super-condensateur 41 est branché sur la ligne électrique 121, au moyen d'un dispositif de gestion 141 du mode de fonctionnement. Il existe deux modes de fonctionnement : le mode « récupération » d'énergie et le mode « restitution » d'énergie. L'ensemble super-condensateur 41 et dispositif de gestion 141 sont branchés en parallèle de l'ensemble moteur électrique de traction 231 et onduleur 221.

Une unité de pilotage 21 du couple appliqué à la roue du véhicule gère la circulation de l'énergie électrique dans la chaîne de traction. Celle-ci reçoit, entre autres, les signaux appropriés venant d'une unité de traitement 211 d'une commande d'accélération CA à disposition du conducteur du véhicule. En supposant au départ que le super-condensateur 41 est déchargé, à la première décélération, l'unité de pilotage 21 du couple appliqué à la roue du véhicule ordonne à l'onduleur 221 de piloter le moteur électrique 231 en générateur, à un niveau de couple de freinage correspondant au souhait de décélération du conducteur du véhicule, et ordonne en même temps au dispositif de gestion 141 de passer en mode « récupération », ce qui provoque automatiquement la charge du super-condensateur 41. Cette charge peut intervenir tant que le super-condensateur n'a pas atteint sa charge maximale. A la charge maximale et en cas de demande de décélération persistante, l'unité de pilotage 21 du couple appliqué à la roue du véhicule fait dévier l'énergie électrique vers une résistance de dissipation (non représentée) ou cesse de faire fonctionner le moteur en générateur et, éventuellement, actionne automatiquement les freins mécaniques du véhicule.

Dès que le conducteur du véhicule demande une accélération, même si le super-condensateur n'est pas à sa charge maximale admissible, l'unité 21 ordonne au dispositif de gestion 141 de se mettre en mode « restitution », et ordonne en même temps à l'onduleur 221 de piloter le moteur électrique 231 de façon à ce qu'il délivre un couple moteur approprié en déchargeant le super-condensateur 41, sans action sur le moteur thermique.

La décharge peut se poursuivre jusqu'à un seuil minimal prédéterminé, mais il n'est pas souhaitable, compte tenu de ce qu'est un super-condensateur, d'aller jusqu'à une décharge totale. En effet, à bas niveau de charge d'un super-condensateur, la tension est très faible. L'absorption d'une puissance donnée impose un courant d'autant plus intense que le niveau de charge est faible. Or il existe bien entendu une limite au courant admissible. On a donc intérêt à maintenir un certain niveau de charge minimal (seuil bas), d'autant que la quantité d'énergie stockée dans le super-condensateur à ce niveau de tension est peu significative pour la traction.

En outre, même si la quantité d'énergie résiduelle stockée dans le super-condensateur est peu significative pour la traction, on dispose malgré tout d'un stock d'énergie bien utile pour alimenter certains organes électriques si le moteur thermique est à faible charge, donc incapable de développer immédiatement une puissance suffisante. Bien entendu, si l'on a été amené à puiser de l'énergie dans le super-condensateur en l'amenant ainsi sous le niveau de charge minimal prédéterminé, il convient de préférence de le recharger immédiatement en puisant de l'énergie dans la source d'énergie électrique (ici, le moteur thermique couplé à une machine électrique).

A la figure 2, on voit un moteur thermique 102 mécaniquement accouplé à une machine électrique 112 via un embrayage 100. L'énergie électrique absorbée (ou fournie) par cette machine électrique 112 provient d'un (ou alimente) un super-condensateur 42 par l'intermédiaire d'un dispositif de gestion 142. L'arbre de sortie 520 de la machine électrique 112 est mécaniquement couplé à une roue 52, via une boîte de vitesse 62.

Une unité de pilotage 22 du couple appliqué à la roue du véhicule gère la circulation de l'énergie électrique dans la chaîne de traction. Celle-ci reçoit, entre autres, les signaux appropriés venant d'une unité de traitement 212 d'une commande d'accélération CA à disposition du conducteur du véhicule. En supposant au départ que le super-condensateur 42 est au niveau de charge minimale, à la première décélération, l'unité de pilotage 22 du couple appliqué à la roue du véhicule ordonne au dispositif de gestion 142 de basculer en mode « récupération » et à un onduleur 222 de piloter la machine électrique 112 en générateur, à un niveau de couple de freinage correspondant au souhait de décélération du conducteur du véhicule, ce qui provoque automatiquement la charge du super-condensateur 42. Cette charge peut intervenir tant que le super-condensateur n'a pas atteint sa charge maximale. A la charge maximale et en cas de demande de décélération persistante, l'unité 22 dévie l'énergie électrique vers une résistance de dissipation (non représentée) ou cesse de faire fonctionner la machine électrique en génératrice et, éventuellement, actionne automatiquement les freins mécaniques du véhicule.

Dans tous les schémas de véhicule, que ce soit hybride parallèle ou hybride série ou autre, dès que le conducteur du véhicule demande une accélération, même si le super-condensateur n'est pas à sa charge maximale admissible, l'unité centrale (21 ou 22) ordonne au dispositif de gestion (141 ou 142) de fonctionner en mode « restitution » et à l'onduleur (221 ou 222) de piloter la machine électrique (231 ou 112) en moteur, de façon à ce qu'il délivre un couple moteur approprié en déchargeant en priorité le super-condensateur, dans une première phase sans action sur la source d'énergie électrique.

De même dans tous les schémas de véhicule, si la demande de traction est telle que, au courant maximal de décharge des super-condensateurs, le moteur électrique de traction ne peut fournir un couple suffisant, l'objectif prioritaire, selon l'invention, de toujours chercher en priorité à décharger le super-condensateur en cas de demande de traction n'exclut pas que l'on puisse faire fonctionner en complément la source d'énergie électrique pour alimenter le moteur de traction en énergie électrique.

En cas de demande de décélération du véhicule, faire fonctionner la machine électrique couplée mécaniquement à une roue en générateur en utilisant l'énergie électrique qu'elle produit pour recharger le super condensateur jusqu'à un état de charge maximal est un objectif de gestion de la chaîne de traction qui est prioritaire par rapport à toute autre forme de freinage du véhicule. Cependant, bien entendu, la sécurité de fonctionnement du véhicule doit toujours être assurée. Cela peut imposer de provoquer un freinage mécanique traditionnel, éventuellement de puissance tellement importante que la récupération simultanée d'énergie pourrait ne concerner qu'une quantité d'énergie faible ou même négligeable par rapport à l'énergie de freinage totale mise en jeu.

En remarque finale, signalons que, dans tous les schémas de véhicule, on peut en outre prévoir de fonctionner, non seulement dans un mode de gestion récupérant l'énergie au freinage comme expliqué ci-dessus, mais encore et en outre dans un mode de gestion permettant une amplification momentanée de l'accélération, par ailleurs connu sous le nom de « booster ». Dans ce cas, la chaîne de traction fonctionnera au moins partiellement selon un autre mode de gestion de l'énergie, dans lequel l'objectif prioritaire est de toujours chercher à charger au maximum le super-condensateur pour pouvoir assister le moteur thermique (ou plus généralement la source d'énergie électrique) en phase d'accélération. On peut basculer de façon automatique entre le mode selon l'invention favorisant la récupération (toujours tendre en priorité vers le seuil bas de charge) et cet autre mode favorisant une action de type « booster ». Si le mode selon l'invention se caractérise par la recherche automatique d'un niveau de charge minimal prédéterminé pour le super-condensateur, ledit autre mode, qualifié de « booster », se caractérise au contraire par la recherche automatique d'un niveau de charge maximal dont est capable le dispositif de stockage à super-condensateur installé dans le véhicule. Non seulement on peut basculer d'un mode à l'autre, mais on peut bien entendu fonctionner en visant un retour automatique à n'importe quel niveau de charge intermédiaire. On peut procéder à une sélection manuelle entre deux modes de fonctionnement, l'un récupérant au mieux l'énergie de freinage comme expliqué, et l'autre de type « booster », ou encore placer cette sélection sous le contrôle d'un processeur chargé des programmes adéquats pour analyser le comportement du conducteur, ce programme pouvant aussi puiser certains de ses paramètres par un lien avec un système GPS de reconnaissance de parcours, pour sélectionner automatiquement l'un deux des modes visés ci-dessus ou n'importe quel niveau intermédiaire.

## Revendications

1. Chaîne de traction électrique pour véhicule, ladite chaîne de traction comprenant :
- une commande CA d'accélération et décélération à disposition du conducteur du véhicule ;
- une unité de traitement (211, 212) de la commande CA permettant de repérer et d'évaluer le couple moteur souhaité et de repérer et d'évaluer le couple freineur souhaité ;
- au moins une machine électrique (231, 112) reliée à au moins une roue motrice, et couplée à une ligne électrique reliant la source d'énergie électrique et la machine électrique, ladite machine électrique étant capable de fonctionner en moteur en absorbant de l'énergie électrique disponible sur la ligne électrique et en transmettant à ladite roue motrice un couple moteur, ladite machine électrique étant capable de fonctionner en génératrice en transmettant à ladite roue motrice un couple freineur et en restituant de l'énergie électrique sur la ligne électrique ;
- un dispositif de stockage (41, 42) d'énergie électrique branché sur ladite ligne électrique, le dispositif de stockage d'énergie électrique consistant en un ou plusieurs super-condensateurs ;
- une source d'énergie électrique, disponible pour la traction du véhicule, autre que le dispositif de stockage d'énergie électrique ;
- un dispositif de gestion du mode de fonctionnement sélectionnant un mode en récupération ou un mode en restitution d'énergie ;
- une unité de pilotage (21, 22) du couple appliqué à la roue du véhicule, permettant de :
• en cas de demande de couple moteur, faire fonctionner la machine électrique en moteur en consommant l'énergie électrique stockée dans le dispositif de stockage d'énergie électrique tant que la charge du dispositif de stockage d'énergie électrique n'est pas minimale,
• en cas de demande de couple freineur, faire fonctionner la machine électrique en générateur en utilisant l'énergie électrique produite pour recharger le dispositif de stockage d'énergie électrique tant que la charge du dispositif de stockage d'énergie électrique n'est pas maximale,
**caractérisée en ce que** l'unité de pilotage (21, 22) du couple appliqué à la roue du véhicule utilise le dispositif de stockage d'énergie électrique autre que la source d'énergie électrique en priorité par rapport à l'utilisation de l'autre source d'énergie électrique, pour fournir l'énergie nécessaire à la traction du véhicule en cas de demande de couple moteur, et l'unité de pilotage (21, 22) du couple appliqué à la roue du véhicule rechargera en priorité le dispositif de stockage de l'énergie électrique en priorité par rapport à l'utilisation de tout autre dispositif de freinage en cas de demande de freinage.

2. Chaîne de traction selon la revendication 1, pour véhicule de type hybride parallèle.

3. Chaîne de traction selon la revendication 1, pour véhicule de type hybride série.

4. Chaîne de traction selon l'une des revendications 1 à 3, dans laquelle le dispositif de stockage peut emmagasiner au moins 70 kJoules.

5. Chaîne de traction selon l'une des revendications 1 à 4, dans laquelle le dispositif de stockage peut emmagasiner au plus 150 kJoules.

## Patentansprüche

1. Elektrische Zugkette für ein Fahrzeug, wobei die Zugkette aufweist:
- eine dem Fahrzeugführer zur Verfügung stehende CA-Steuerung zum Beschleunigen und Bremsen;
- eine Verarbeitungseinheit (211, 212) der CA-Steuerung, die es ermöglicht, das gewünschte Antriebsmoment und das gewünschte Bremsmoment zu ermitteln und auszuwerten;
- mindestens eine elektrische Maschine (231, 112), die mit mindestens einem Antriebsrad verbunden und mit einer Leitung gekoppelt ist, die die elektrische Energiequelle und die elektrische Maschine verbindet, wobei die elektrische Maschine in der Lage ist, als Motor zu arbeiten, indem sie auf der Leitung verfügbare elektrische Energie absorbiert und an das Antriebsrad ein Antriebsmoment überträgt, wobei die elektrische Maschine in der Lage ist, als Generator zu arbeiten, indem sie an das Antriebsrad ein Bremsmoment liefert und elektrische Energie an die Leitung zurückgibt;
- eine Speichervorrichtung (41, 42) für elektrische Energie, die an die Leitung angeschlossen ist, wobei die elektrische Energiespeichervorrichtung aus einem oder mehreren Superkondensatoren besteht;
- eine elektrische Energiequelle, die für das Ziehen des Fahrzeugs zur Verfügung steht und sich von der elektrischen Energiespeichervorrichtung unterscheidet;
- eine Verwaltungsvorrichtung für den Betriebsmodus, die einen Energie-Wiedergewinnungsmodus oder einen Energie-Rückgabemodus auswählt;
- eine Steuereinheit (21, 22) für das an das Rad des Fahrzeugs angelegte Drehmoment, die es ermöglicht:
• im Fall einer Anforderung eines Antriebsmoments, die elektrische Maschine als Motor arbeiten zu lassen, indem sie die in der elektrischen Energiespeichervorrichtung gespeicherte elektrische Energie verbraucht, solange die Ladung der elektrischen Energiespeichervorrichtung keinen unteren Grenzwert erreicht hat,
• im Fall einer Anforderung eines Bremsmoments, die elektrische Maschine als Generator arbeiten zu lassen, indem die erzeugte elektrische Energie verwendet wird, um die elektrische Energiespeichervorrichtung aufzuladen, so lange die Ladung der elektrischen Energiespeichervorrichtung keinen oberen Grenzwert erreicht hat,
**dadurch gekennzeichnet, dass** die Einheit (21, 22) zum Steuern des an das Rad des Fahrzeugs angelegten Drehmoments die elektrische Energiespeichervorrichtung anstelle der elektrischen Energiequelle prioritär im Verhältnis zur Nutzung der anderen elektrischen Energiequelle nutzt, um die für das Ziehen des Fahrzeugs im Fall einer Anforderung eines Antriebsmoments notwendige Energie zu liefern, und die Steuereinheit (21, 22) des an das Rad des Fahrzeugs angelegten Drehmoments prioritär die elektrische Energiespeichervorrichtung im Verhältnis zur Nutzung jeder anderen Bremsvorrichtung im Fall einer Bremsanforderung prioritär auflädt.

2. Zugkette nach Anspruch 1 für ein Parallel-Hybridfahrzeug.

3. Zugkette nach Anspruch 1 für ein Serien-Hybridfahrzeug.

4. Zugkette nach einem der Ansprüche 1 bis 3, bei der die Speichervorrichtung mindestens 70 kJoule speichern kann.

5. Zugkette nach einem der Ansprüche 1 bis 4, bei der die Speichervorrichtung höchstens 150 kJoule speichern kann.

## Claims

1. Electric drivetrain for a vehicle, the said drivetrain comprising:
- an acceleration and deceleration control CA at the disposal of the vehicle driver;
- a processing unit (211, 212) for the control CA allowing the desired driving torque to be located and evaluated and the desired braking torque to be located and evaluated;
- at least one electric machine (231, 112) connected to at least one driving wheel, and coupled to an electric line connecting the electrical energy source and the electric machine, the said electric machine being capable of operating as a motor by absorbing electrical energy available on the electric line and by transmitting a driving torque to the said driving wheel, the said electric machine being capable of operating as a generator by transmitting a braking torque to the said driving wheel and by restoring electrical energy on the electric line;
- an electrical energy storage device (41, 42) connected to the said electric line, the electrical energy storage device consisting of one or more super-capacitors;
- an electrical energy source, available for the traction of the vehicle, other than the electrical energy storage device;
- a device for managing the operating mode selecting an energy recovery mode or an energy restoration mode;
- a unit (21, 22) for controlling the torque applied to the vehicle wheel, allowing:
• in the case of a demand for driving torque, the electric machine to be operated as a motor by consuming the electrical energy stored in the electrical energy storage device as long as the charge of the electrical energy storage device is not minimal,
• in the case of a demand for braking torque, the electric machine to be operated as a generator by using the electrical energy produced to recharge the electrical energy storage device as long as the charge of the electrical energy storage device is not maximal,
**characterised in that** the unit (21, 22) for controlling the torque applied to the vehicle wheel uses the electrical energy storage device other than the electrical energy source as a priority over the use of the other electrical energy source, for supplying the energy necessary for the traction of the vehicle in the case of a demand for driving torque, and the unit (21, 22) for controlling the torque applied to the vehicle wheel will recharge as a priority the electrical energy storage device as a priority over the use of any other braking device in the case of a demand for braking.

2. Drivetrain according to Claim 1, for a vehicle of the parallel hybrid type.

3. Drivetrain according to Claim 1, for a vehicle of the series hybrid type.

4. Drivetrain according to one of Claims 1 to 3, in which the storage device can store at least 70 kJ.

5. Drivetrain according to one of Claims 1 to 4, in which the storage device can store at least 150 kJ.
